# EUROPEAN PATENT SPECIFICATION

(11) **EP 3 188 285 B1**
(45) Date of publication and mention of the grant of the patent: **11.09.2019**
(21) Application number: 15825368.2
(22) Date of filing: 15.07.2015
(51) Int. Cl.: H01M 2/18, H01M 2/16, B26D 5/00, H01M 10/0525, H01M 10/42, H01M 2/14

(54) **MICROPOROUS MEMBRANE ROLL FOR BATTERY SEPARATORS AND METHOD FOR PRODUCING SAME**
MIKROPORÖSE MEMBRANWALZE FÜR BATTERIESEPARATOREN UND VERFAHREN ZUR HERSTELLUNG DAVON
ROULEAU DE MEMBRANE MICROPOREUSE POUR SÉPARATEURS DE BATTERIE, ET PROCÉDÉ DE PRODUCTION ASSOCIÉ

(30) Priority: 25.07.2014 JP 2014151653
(43) Date of publication of application: 05.07.2017
(73) Proprietor: JNC Corporation, Chiyoda-ku Tokyo 100-8105 (JP); JNC Petrochemical Corporation, Tokyo 100-0004 (JP)
(72) Inventor: HONDA Kouichi, Ichihara-shi Chiba 290-8551 (JP); YAMAMOTO Yasuhiro, Ichihara-shi Chiba 290-8551 (JP); GOTO Shuichi, Ichihara-shi Chiba 290-8551 (JP)
(74) Representative: Becker Kurig Straus
(86) International application number: PCT/JP2015/070237
(87) International publication number: WO 2016/013462

(56) References cited:
- JP-A- 2002 334 689
- JP-A- 2004 268 925
- JP-A- 2007 141 590
- JP-A- 2009 295 500
- JP-A- 2012 142 206
- US-A1- 2006 164 647
- US-A1- 2011 143 056

## Description

### Technical Field

The invention relates to a microporous film roll for a battery separator, and a method for producing the same.

### Background Art

A separator being a component of a battery is a member separating a positive electrode and a negative electrode in a state of holding an electrolyte. The battery is charged and discharged by conduction of an ion between the positive electrode and the negative electrode through the separator. In a lithium-ion battery, a thin, flexible and heat-resistant film material having micropores is used as the separator. In the lithium-ion battery, charging and discharging are performed by traveling of a lithium ion through the micropores of the separator.

For example, a demand for achievement of high capacity and size reduction of the lithium-ion battery has increasingly risen in association with size reduction and weight reduction of various electric and electronic equipments and vehicle components each having the lithium-ion battery built-in, and various main components of the lithium-ion battery require a shape and properties suitable for a thinner and smaller battery. Therefore, in production of a lithium-ion battery separator material, a product obtained by slitting a film from an original roll into microporous films having various lengths and widths, and winding the resulting films is produced as a product roll. When the product roll is used in a battery production line, a separator material is paid out from an end in an outermost part of the product roll, and introduced into the battery production line. The separator material is continuously paid out in interlocking of the product roll with a separator material conveyance line in the battery production line. If paying-out of the separator material progresses and the separator material remaining in the product roll is reduced, detection is required on coming close to finishing of paying-out of the separator material in the battery production line in order to stop the separator material conveyance line, exchange the product rolls, or the like. Then, a site indicating approaching of finishing of the separator material is provided near winding end of the microporous film of the product roll (Patent literature No. 1) .

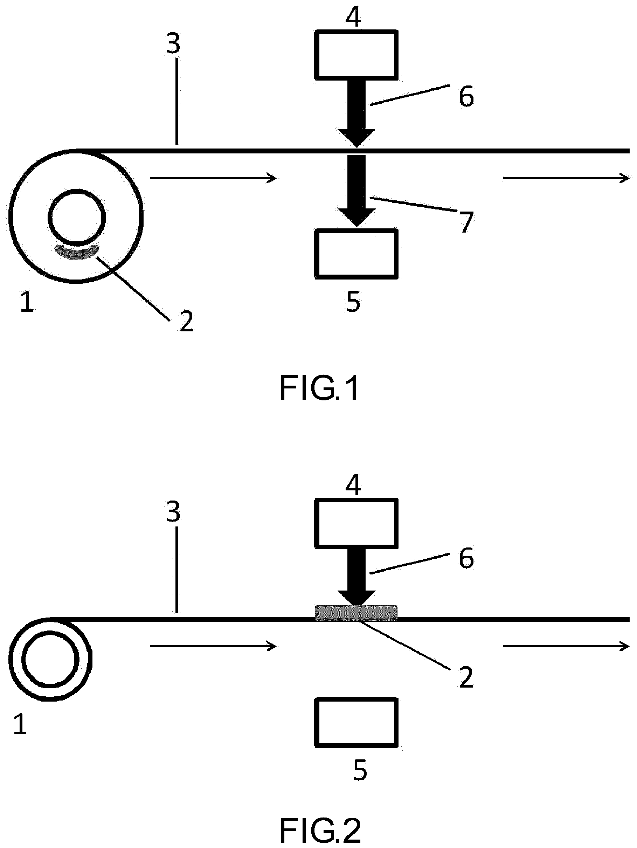

As such a site, a light-shielding adhesive tape (hereinafter, referred to as "indicator tape") is used. The adhesive tape having a width of 2 to 3 centimeters and a thickness of tens of micrometers is ordinarily used. In a battery assembly line, the microporous film is led out from the product roll and conveyed (Figure 1). If development of the product roll comes very close to finishing, the indicator tape passes through a sensor, and detection is made on coming close to winding end of the product roll (Figure 2). Thus, transition can be made to operation such as stop of a conveyance belt or exchange of the product rolls in a state in which behavior of the product roll and the conveyance line is stable.

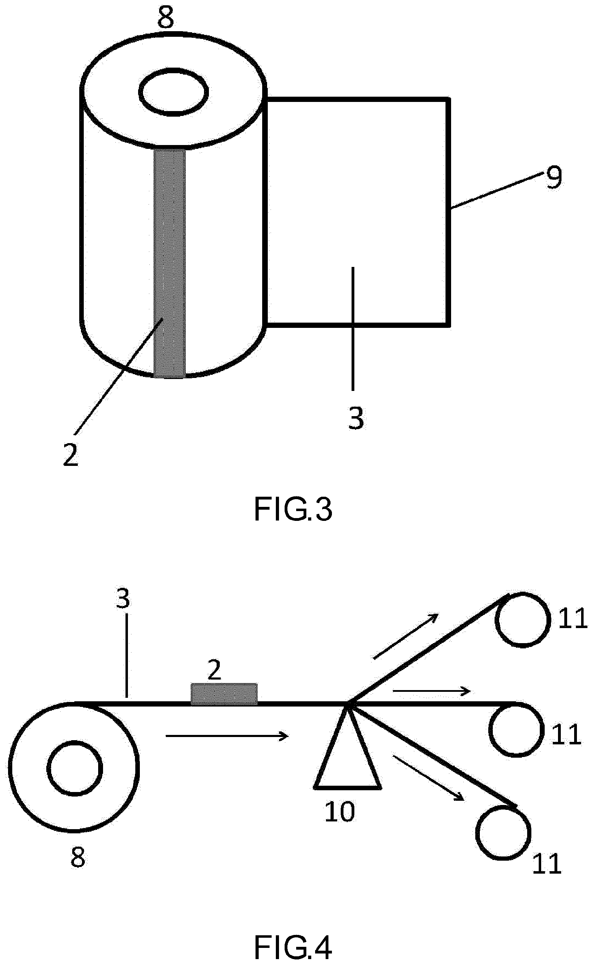

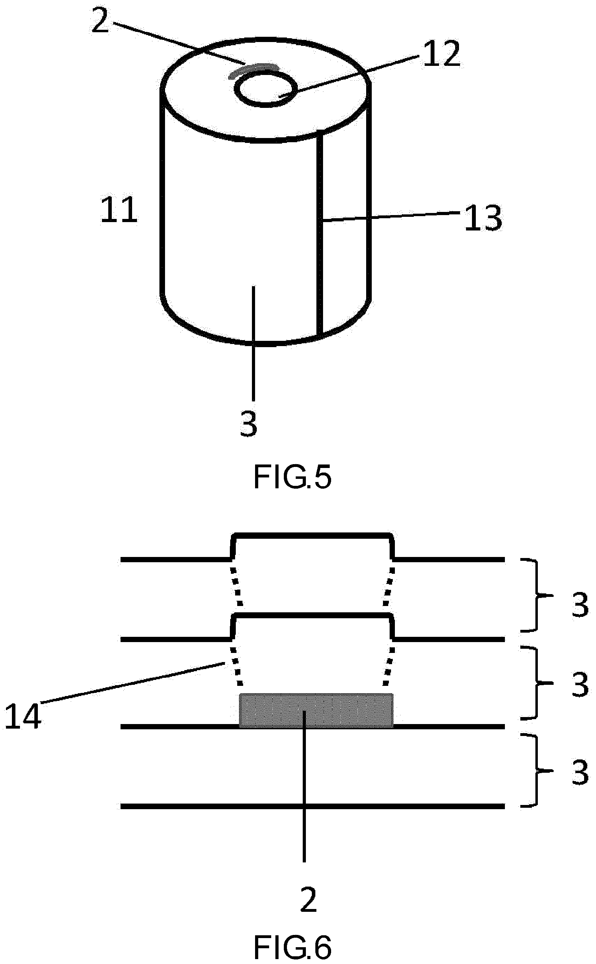

In production of the microporous film for the battery separator, a processing step from the original roll into the product roll is generally called a slitting step. The indicator tape is attached onto the microporous film before the original roll is conveyed to the slitting step. First, the indicator tape is attached onto a place near the winding end in the outermost part of the original roll so as to cross a place between both ends of the film (Figure 3). The original roll attached with the indicator tape is loaded into the slitting step. In the slitting step, the microporous film is paid out from a terminal portion of the original roll, and is fed to a cutter. The microporous film paid out therefrom is slit into films each having a predetermined width by the cutter, and the resulting film is wound around a winding core of the product roll (Figure 4). Then, at a time point when the microporous film having a desired length is wound around the product roll, the microporous film is cut, and winding is finished. Through the slitting step, the indicator tape is wound near the winding core of the product roll, and the microporous film for the separator in a length of hundreds of meters or more is ordinarily wound around a place outside the indicator tape (Figure 5).

Although a thickness of the indicator tape is ordinarily less than 50 micrometers, a thickness of the microporous film for the separator is further thinner. Therefore, only a portion of the microporous film onto which the indicator tape is attached becomes particularly thick, and the indicator tape portion is projected from a surface of the microporous film. In the product roll, the microporous film is tightly wound around a place on the projected part. As a result, an impression pressed onto the projected part remains on the microporous film positioned on an upper side of the indicator tape to hundreds of meters in the winding length (Figure 6). Figures 1 to 6 are not forming part of the present invention.

In a battery assembly step, the microporous film for the separator is required to be precisely formed in conforming to a thinner and smaller battery shape. For such precise formation, such an indicator tape impression is not preferred. Then, an effort on reducing the thickness of the indicator tape has been made. However, even if the thickness is reduced to about 5 micrometers, which is the thinnest, the portion onto which the indicator tape is attached cannot be flat, and the indicator tape impression cannot be eliminated. As long as the indicator tape is attached thereon, reduction of quality of the separator material cannot be avoided. Furthermore, such an ultra-thin indicator tape is a specialty product, and is not preferred, either, in view of cost of the separator material.

However, without the indicator tape, an only limited residual amount of the microporous film of the product roll cannot be detected, and a conveying device cannot be stably stopped to exchange the product rolls under stable conditions. A mark for informing an operator of winding end of the microporous film is a member necessary for battery assembly, and cannot be omitted.

Patent literature No. 2 discloses an apparatus for marking a defect which detects a defect in a long sheet product transferred in a longitudinal direction by an inspection apparatus and places a mark at the defect at a position downstream of the inspection apparatus.

Patent literature No. 3 discloses a material roll that includes a roll of an optical film having defect information markings printed thereon and is resistant to the formation of a defect by the transfer of a bump/dent deformation at the marking site.

Patent literature No. 4 provides a battery enabling a traceability check by a nondestructive method.

Patent literature No. 5 provides a winding type non-aqueous electrolyte secondary battery with high reliability, formed by arranging a porous heat resistant layer between a cathode and/or an anode and a separator.

### Citation List

### Patent Literature

Patent literature No. 1: JP 2009-295500 A
Patent literature No. 2: US 2006/164647 A1
Patent literature No. 3: US 2011/143056 A1
Patent literature No. 4: JP 2012 142206 A
Patent literature No. 5: JP 2007 141590 A

### Summary of Invention

### Technical Problem

Then, the present inventors have sought a means for placing, onto a microporous film for a separator, a mark that does not influence a surface shape of the microporous film while having a function similar to the function of a conventional indicator tape.

### Solution to Problem

As a result, the present inventors have found that substitution for a conventional indicator tape can be achieved by providing a colored or character-printed site having substantially no thickness near an end part of a separator material in an outermost part of an original roll in a slitting step, and utilizing the site as an indicator part for informing an operator of approaching of the end part of the separator material in a battery production line. Furthermore, when printing thereof is made in an inspection unit provided in facilities in the slitting step, the present inventors have succeeded in applying a substitution means for the conventional indicator tape without providing new facilities.

More specifically, the present invention is a microporous film roll for a battery separator according to independent claim 1 and a method for producing a microporous film roll for a battery separator according to independent claim 6. The preferred embodiments are as set out in the dependent claims.

### Brief Description of Drawings

Figure 1 schematically shows development of a product roll and traveling of a separator material in a battery assembly line. Figure 1 is a schematic diagram when a traveling surface is viewed from a side, in which an arrow shows a direction of traveling of the separator material. Figure 1 shows a state in which many microporous films remain in the product roll, and an indicator tape is near a winding core of the product roll, and is not developed yet.
Figure 2 schematically shows development of a product roll and traveling of a separator material in a battery assembly line . Figure 2 is a schematic diagram when a traveling surface is viewed from a side, in which an arrow shows a direction of traveling of the separator material. Figure 2 shows a state in which the product roll having the microporous film remaining therein becomes small, and an indicator tape passes through a sensor on a conveyance line, and sensor light is blocked by the indicator tape.
Figure 3 shows an indicator tape attached onto an end part outside an original roll.
Figure 4 shows an aspect in which tan original roll is cut by a cutter, and the resulting material is wound around a winding core of a product roll.
Figure 5 schematically shows a part of a cross section of a product roll having an indicator tape.
Figure 6 schematically shows a state in which an impression of an indicator tape is placed on a microporous film for a separator wound around a product roll. Figures 1 to 6 do not form part of the present invention.
Figure 7 shows a printing example of an indicator part, in which Figure 7(a) shows a wholly colored surface, Figure 7(b) shows a dot pattern, Figure 7(c) shows a stripe pattern, and Figure 7(d) shows a wallpaper-like pattern.
Figure 8 schematically shows a slitting step line having an inspection unit to show an example of an indicator part when the indicator part is wholly colored.
Figure 9 schematically shows a part of a cross section of a product roll having an indicator part.
Figure 10 schematically shows traveling of an indicator part in a battery production line, in which the indicator part is traveling toward a detecting machine.
Figure 11 schematically shows traveling of an indicator part in a battery production line, in which the indicator part is passing through a detecting machine.

### Description of Embodiments

### (Microporous film roll for a battery separator)

A microporous film roll for a battery separator has, on a microporous film for the battery separator, an indicator part different in optical characteristics from the microporous film for the battery separator. The present invention is a microporous film roll (1) for a battery separator according to independent claim 1.

### (Microporous film)

The microporous film for the battery separator onto which the indicator part according to the invention is fixed may be any kind of film, as long as the film has been used so far. A representative microporous film is a polyolefin-based microporous film that is suitable for contact with an organic solvent-based electrolyte, and can be produced at a low cost. As a method for producing the polyolefin-based microporous film, two methods are known. One is a wet method, namely, a method according to which voids are formed by forming polyolefin dissolved in a solvent into a thin film, and then removing the solvent. The other is a dry method, namely, a method according to which the voids are formed in an interface inside the polyolefin or between phases of components that constitutes a polyolefin material by stretching the polyolefin material. The dry method is considered to be advantageous in view of capability of producing a wide original roll without using the solvent. However, even the original roll of the microporous film for the separator, produced by any method, has substantially no difference in printing performance. Accordingly, in the invention, the original roll of the microporous film for the separator, produced by any method, can be used. A method for producing the microporous film roll for the battery separator according to the invention has features of a portion in which the indicator part is provided for the original roll. In the method for producing the microporous film roll for the battery separator according to the invention, steps up to production of the original roll are not restricted.

### (Example of production of the original roll)

Hereinafter, as an example of the method for producing the original roll of the microporous film for the separator, the dry method in which a polypropylene-based polymer is used as a raw material will be shown. As the propylene-based polymer, a polypropylene homopolymer or a polypropylene copolymer containing a small amount of ethylene unit is preferably used. The original roll of the microporous film for the separator, the microporous film being formed of the polypropylene-based polymer, is typically produced by the method described below. First, a raw material containing the polypropylene-based polymer is charged into an extruder, and melted and kneaded, and then extruded from a die. The extruded film is cooled to obtain a nonporous original film for stretching.

Next, the original film for stretching is preliminarily heat-treated at a temperature lower than a melting point of the raw material. Then, the heat-treated original film for stretching is stretched at a low temperature (cold stretching) . In the above case, as a stretching temperature, 15 to 35°C is preferred. A stretch ratio is preferably over one time and 2.5 times or less. Further, the original film subjected to cold stretching is stretched at a high temperature (hot stretching) . In the above case, the stretching temperature is preferably a temperature equal to higher by 30°C than the melting point of the raw material and a temperature equal to or lower by 5°C than the melting point of the raw material. The stretch ratio is preferably 1.5 to 3.5 times. Through the cold stretching and the hot stretching described above, pores are formed in the polypropylene-based polymer film.

Finally, the porous polypropylene polymer film obtained is subjected to relaxation treatment. In the relaxation treatment, the film is conveyed by a plurality of rolls in which a rotation speed is set to a predetermined level, respectively, at a temperature equal to or higher by 30°C than the melting point of the raw material, and a temperature equal to or lower by 5°C than the melting point of the raw material. Voids formed in the film are stabilized by the relaxation treatment, and generation of wrinkles in the film is suppressed. Thus, the original roll is completed.

### (Preparation of the indicator part)

The indicator part of the microporous film roll for the battery separator according to the invention is a site recognized, by an optical sensor in a battery production line, to be different from other sites, namely, a microporous film for a separator (separator material) without any indicator part. In order to make such recognition, the site is required to have a difference at a degree at which optical characteristics of the indicator part and the separator material can be identified by the optical sensor. For example, when a transmissive optical sensor is used, transmission of visible light is ordinarily relatively high in the separator material, and therefore a portion colored or character-printed in a manner of improving light shieldability for the visible light can be used as the indicator part. Moreover, when a reflective optical sensor is used, a portion colored or character-printed to have reflectivity different from a surface state of the separator material (high reflectivity by a smooth surface or low reflectivity by absorption of a specific wavelength) can be used as the indicator part. The indicator part that can be detected by such an optical sensor generally used can be effectively prepared by coloring or character-printing by using a printing machine. Although a kind of the printing machine is not limited, an inkjet printer or a laser printer that is general as a means for printing on a film-shaped material is preferred. Moreover, a coloring or character-printing device of a magic marker type, in which a pen-shaped head is directly brought into contact with a film surface, can also be used.

A position of the indicator part is a spot distant by 2 to 5 meters from an end part of the separator material positioned in an outermost part of the original film. The indicator part is a section colored or character-printed in a width of 0.5 to 5 centimeters in a film longitudinal direction over a left-right end of the film in the above spot. Color of coloring or character-printing is not restricted, as long as differentiation of the above-described optical characteristics can be made. A pattern of coloring or character-printing is not restricted, either, as long as differentiation of the above-described optical characteristics can be made.

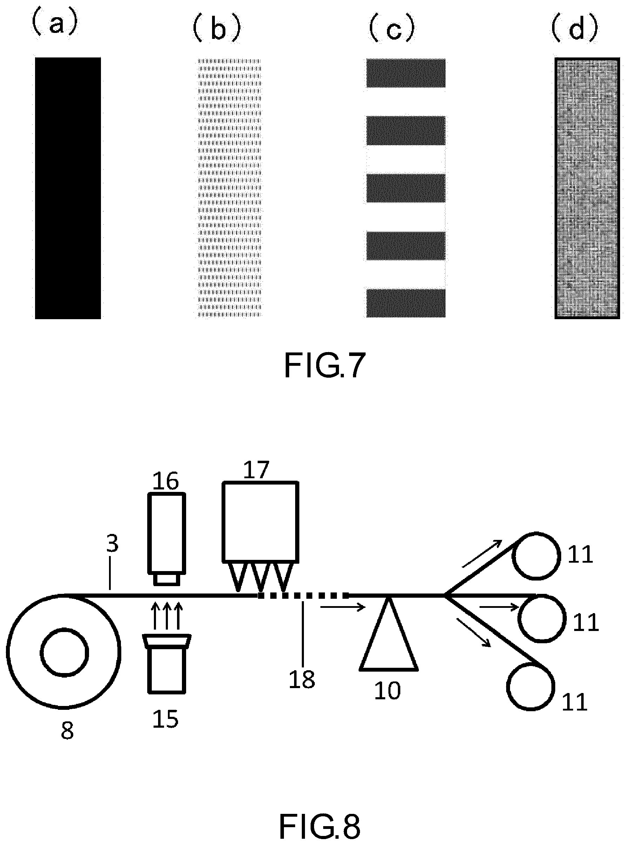

A general optical sensor currently used in the battery production line detects passage of the indicator tape by change in light non-transmission or reflectivity. Use of the indicator part that can be detected even by the existing optical sensor eliminates necessity of modification of the existing battery production line, and is advantageous in terms of cost. In the above case, as the color used for coloring or character-printing of the indicator part, color having high light shieldability such as black, navy blue or deep green, or color different in reflectivity from the separator material is preferred. Moreover, in the above case, an indicator site may be wholly colored, or the indicator part may be wholly printed with the pattern. The pattern may be any pattern such as a dot pattern or a line pattern (Figures 7(a), 7(b), 7(c) and 7(d)), as long as the light shieldability or the different reflectivity can be ensured in the indicator part as a whole. As a direction of the pattern, the pattern may be along any direction such as a crosswise direction, a length direction or an oblique direction. Coloring or character-printing may be uniform in the indicator part as a whole, or uneven such as gradation coloring, for example. The pattern may be configured by a symbol, a numerical character, a character or a combination thereof.

As ink or a coloring material used for coloring or character-printing, a quick-drying material is preferred so that the separator material can be quickly used in a subsequent processing step after preparation of the indicator part.

In the invention, the indicator part can be previously prepared before the original roll is conveyed to the slitting step. More specifically, the separator material is developed from the outermost part of the original roll, and is introduced into a coloring or character-printing device, such as the inkjet printer, installed before a slitting step line. The indicator part is prepared at a predetermined site by using the above-described method. The original roll provided with the indicator part is introduced into the slitting step.

### (Slitting step)

The slitting step is originally a step of adjusting a width and a length of the original roll in conforming to a battery product in which the separator material is used. In the slitting step line, a cutter and a winding device are provided, and the separator material paid out from the original roll is cut by the cutter into the material having a narrow width, and the resulting material is wound around a new winding core for the product roll by the winding device. In the invention, the original roll having no indicator part can also be immediately introduced into the slitting step to prepare the indicator site by the coloring or character-printing device, such as the inkjet printer, provided in the slitting step line. For example, the coloring or character-printing device may be mounted in front of the cutter on a conveyance path for the separator material, and the indicator part can be continuously prepared and cut.

An inspection unit for the separator material is provided at the beginning of the slitting step line, and when a detecting machine for detecting a defective part on a surface of the microporous film, and a printing machine for marking on the detected defective part are provided in the inspection unit, the indicator part can be prepared simultaneously with the inspection (Figure 8). The separator material is paid out from the original roll, and traveled to the inspection unit, and from the end part of the separator material positioned in the outermost part of the original roll, the separator material following therefrom is introduced into the detecting machine. The separator material passing through the detecting machine travels toward the printing machine. When a defect is found in the detecting machine, coloring is made on a defective site in the printing machine. A portion in which no defect is found in the detecting machine directly passes through the printing machine. However, when the above-described predetermined site on which the indicator part is prepared passes through the printing machine, the indicator part is prepared by the above-described coloring or character-printing method in the printing machine. In the printing machine, operation for coloring or character-printing of the indicator part is set apart from marking on the defect. If preparation of the indicator part is finished, the printing machine performs only marking on the defect on the separator material followed by the indicator part and continuously introduced into the printing machine.

A cleaner unit can be provided before the inspection unit, and the separator material from which foreign matters on the surface are removed can also be conveyed to the inspection unit.

Thus, the separator material is provided with the indicator part before reaching the cutter in the slitting step line. The separator material passing through the inspection unit travels toward the cutter. The separator material a width of which is adjusted by the cutter travels toward a winding device. A new winding core for the product roll is placed in the winding device . The end part of the separator material, positioned in the outermost part of the original roll, first reaches the new winding core, and is wound therearound. Subsequently, the indicator part is wound therearound. If the separator material having a predetermined length is wound around the new winding core, the separator material is cut, and winding is completed. The separator material in hundreds of meters or more is ordinarily wound around the product roll.

### (Completion of the product roll)

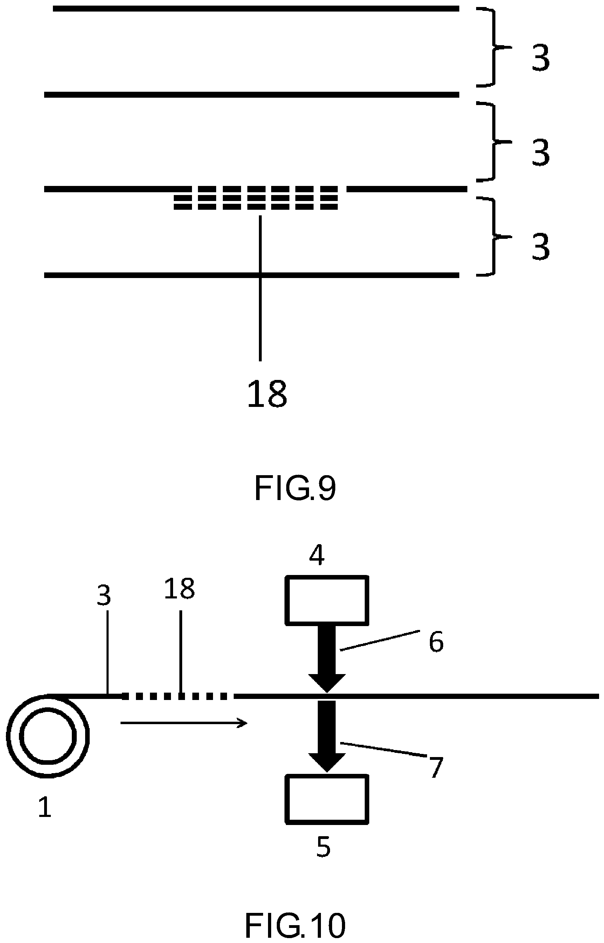

Thus, the product roll is completed. The indicator part is positioned near the winding core of the product roll. In the product roll, the separator material in hundreds of meters or more is wound therearound so as to be
overlapped on the indicator part. The indicator part substantially has no thickness, and therefore the thickness is identical in the portion of the separator having the indicator part, and the portion of the separator having no indicator part. Accordingly, no impression is placed on the separator material overlapped on the indicator part (Figure 9). The completed product roll is packaged and shipped.

### (Production of the battery)

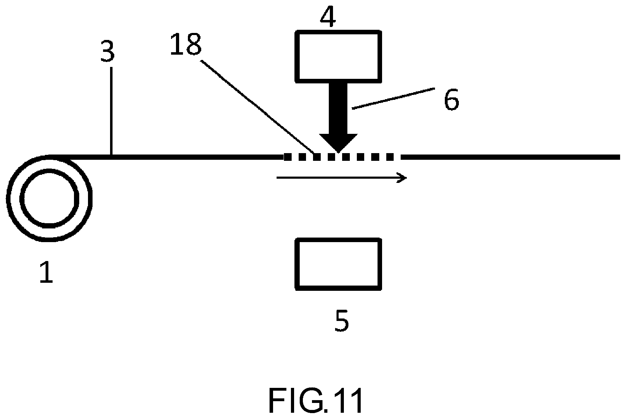

The product roll is used for production of the battery in the battery assembly line. The separator material is developed from the end part outside the product roll, and is conveyed. If the development of the microporous film progresses, and a residual amount of the separator material becomes small, the indicator part near the winding core is developed, and travels toward the sensor on the conveyance line (Figure 10). If the indicator part passes through the optical sensor (Figure 11), a change in the optical characteristics of the separator material is detected, a signal that informs an operator of the residual amount of the separator material being small is sent to the conveyance line. In the conveyance line in which the signal is received, predetermined operation such as conveyance stop or exchange of the product rolls is performed. Thus, in production of the battery, the indicator part according to the invention develops a function equivalent to the function of a conventional indicator tape.

### (Production of the original roll)

In the following steps, the original roll of the microporous film for the separator, the microporous film being made of polypropylene, was produced.

Homopolypropylene having an MFR of 0.5 (JIS K7210), a molecular weight distribution (Mw/Mn) of 10 and a melting point of 163°C was melted and extruded at 210°C by using a twin-screw extruder and a T die. A nonporous original roll was guided to a cooling roll at a draft ratio of 32, and then wound therearound. The nonporous original roll obtained was heat-treated in an oven, and then subjected to cold stretching to be about 1.1 times in a length direction under temperature conditions controlled at 27°C by a stretching machine, and then subjected to hot stretching to be 2.5 times in the length direction in a hot stretching bath controlled at 155°C. Then, the stretched film was relaxed by 20% at 120°C to obtain the microporous film. The microporous film through the relaxation step was wound therearound as the original roll having a width of 800 millimeters and a length of 1,200 meters.

### Examples

### Example 1

An original roll was carried to a slitting step line, and a microporous film was paid out from an end part, and conveyed to an inspection unit through a cleaner. In the inspection unit, a detecting machine for detecting a defect on a surface of a separator material by a CCD camera, and an inkjet printer for coloring a defective part found by the detecting machine are installed. In the inkjet printer in the inspection unit, working for printing color on the defective part, and simultaneously working for printing an indicator part are programmed. The indicator part was printed on a portion through 3 meters from the end part of the microporous film by the inkjet printer. A printing pattern is a black dot pattern indicated at an interval of 100 dots per square centimeter in a belt-shaped section having a width of 3 centimeters across a left-right end of the microporous film. More specifically, the belt-shaped section is a portion of the microporous film from a position distant by 300 centimeters from the end part to a position distant by 303 centimeters from the end part. The indicator part is viewed as a black belt to human eyes. For a separator material introduced to the inspection unit followed by the indicator part, only detection and indication of the defect were performed.

The original roll passing through the inspection unit was fed to a cutter, and divided, and then wound around a winding core for a product roll. The original roll was aligned in width and length, and processed into the product roll having a width of 200 millimeters and a length of 600 meters. Thus, a microporous film roll for a battery separator according to the invention was obtained.

The product roll was conveyed to a battery assembly line, and the microporous film was developed and traveled on an assembly line. When the traveling microporous film was visually observed, an impression of the indicator part was not found. If a residual portion of the film becomes small and the indicator part passed through an optical sensor, the indicator part was detected by the optical sensor.

### Example 2

A product roll was produced under conditions identical to the conditions in Example 1 except that an indicator part was formed into a black dot pattern indicated at an interval of 400 dots per square centimeter in a belt-shaped section having a width of 2 centimeters across a left-right end of a microporous film. The product roll was conveyed to a battery assembly line, and the microporous film was developed and traveled on an assembly line. When the traveling microporous film was visually observed, an impression of the indicator part was not found. If a residual portion of the film becomes small and the indicator part passed through an optical sensor, the indicator part was detected by the optical sensor.

### Example 3

A product roll was produced under conditions identical to the conditions in Example 1 except that an indicator part was formed into a part prepared by wholly coloring, with black ink, a belt-shaped section having a width of 0.5 centimeter across a left-right end of a microporous film. The product roll was conveyed to a battery assembly line, and the microporous film was developed and traveled on an assembly line. When the traveling microporous film was visually observed, an impression of the indicator part was not found. If a residual portion of the film becomes small and the indicator part passed through an optical sensor, the indicator part was detected by the optical sensor.

### Example 4

A product roll was produced under conditions identical to the conditions in Example 1 except that an indicator part was formed into a part prepared by wholly coloring, with black ink, a belt-shaped section having a width of 2 centimeters across a left-right end of a microporous film. The product roll was conveyed to a battery assembly line, and the microporous film was developed and traveled on an assembly line. When the traveling microporous film was visually observed, an impression of the indicator part was not found. If a residual portion of the film becomes small and the indicator part passed through an optical sensor, the indicator part was detected by the optical sensor.

### Example 5

A product roll was produced under conditions identical to the conditions in Example 1 except that an indicator part was formed into a part prepared by wholly coloring, with black ink, a belt-shaped section having a width of 3 centimeters across a left-right end of a microporous film. The product roll was conveyed to a battery assembly line, and the microporous film was developed and traveled on an assembly line. When the traveling microporous film was visually observed, an impression of the indicator part was not found. If a residual portion of the film becomes small and the indicator part passed through an optical sensor, the indicator part was detected by the optical sensor.

### Industrial Applicability

According to the invention, a problem of an impression of an indicator tape has been able to be solved, in which the problem has been considered to be unable to avoid in a microporous film for a separator. According to the invention, quality of a separator material and a battery using the same can be improved. In the invention, the indicator tape is not used, and an indicator part in place of the indicator tape can be provided by using a printing machine previously equipped in a production line, and therefore production cost for the separator can be reduced.

### Reference Signs List

1 Product roll
2 Indicator tape
3 Separator material
4 Optical sensor (light-emitting unit)
5 Optical sensor (light-receiving unit)
6 Sensor light (irradiated to separator material)
7 Sensor light (transmitted through separator material)
8 Original roll
9 End part of separator material of original roll (outermost end part)
10 Cutter
11 Product roll
12 Winding core of product roll
13 End part of separator material of product roll (outermost end part)
14 Impression of indicator tape to be produced separator material
15 Inspection machine (illumination)
16 Inspection machine (CCD camera)
17 Printing machine
18 Indicator part (printed portion)

## Claims

1. A microporous film roll (1) for a battery separator, comprising, on a microporous film (3) for the battery separator, an indicator part (18) different in optical characteristics from the microporous film for the battery separator, the microporous film roll (1) being **characterized in that**
the indicator part (18) substantially has no thickness such that a thickness is identical in a portion of the separator having the indicator part (18) and a portion of the separator having no indicator part (18),
wherein the indicator part (18) is at a predetermined distance from an end part of the microporous film (3) near a winding core (12) of the microporous roll film (3), and has a width of 0.5 to 5 centimeters in a longitudinal direction of the microporous film (3) over a left-right end of the microporous film (3).

2. The microporous film roll (1) for the battery separator according to claim 1, wherein the indicator part (18) and the microporous film roll (1) for the battery separator are different in light shieldability or light reflectivity.

3. The microporous film roll (1) for the battery separator according to claim 1 or 2, wherein the indicator part (18) is a colored or character-printed site by printing.

4. The microporous film roll (1) for the battery separator according to claim 3, wherein the colored or character-printed site by printing is a site colored or character-printed by any printing machine (17) of an inkjet printer, a laser printer and a magic marker.

5. Use of the microporous film roll (1) for the battery separator according to any one of claims 1 to 4, for detecting approaching of an end part of the microporous film (3) for the battery separator in a battery production line, wherein the indicator part (18) is detected by an optical sensor (4, 5) in the battery production line.

6. A method for producing a microporous film roll (1) for a battery separator, comprising:
providing an indicator part (18) different in optical characteristics from the microporous film roll for the battery separator on a microporous film (3) for the battery separator, and
wounding the microporous film (3) around a winding core (12),
wherein the method is **characterized in that**
the indicator part (18) substantially has no thickness, such that a thickness is identical in a portion of the separator having the indicator part (18) and a portion of the separator having no indicator part (18),
the indicator part (18) is provided by coloring or character-printing at a predetermined distance from an end part of the microporous film (3), wherein the indicator part (18) has a width of 0.5 to 5 centimeters in a longitudinal direction of the microporous film (3) over a left-right end of the microporous film (3), and
the end part of the microporous film (3) close to where the indicator part (18) is colored or printed first reaches the winding core (12) of the microporous roll film (3) when the microporous film (3) is wounded around the winding core (12).

7. The method for producing the microporous film roll (1) for the battery separator according to claim 6, comprising, providing an indicator part (18) different in light shieldability or light reflectivity from the microporous film roll for the battery separator on the microporous film (3) for the battery separator.

8. The method for producing the microporous film roll (1) for the battery separator according to claim 6 or 7, wherein the indicator part (18) is prepared in a step before a slitting step of processing an original roll (8) of the microporous film (3) for the battery separator into a product roll (11).

9. The method for producing the microporous film roll (1) for the battery separator according to claim 6 or 7, wherein the indicator part (18) is prepared during a slitting step of processing an original roll (8) of the microporous film (3) for the battery separator into a product roll (11), wherein a slitting step line is provided with a cutter (11), a winding device, and a coloring or character-printing device (17).

10. The method for producing the microporous film roll (1) for the battery separator according to any one of claims 6 to 9, wherein the indicator part (18) is provided by coloring or character-printing by printing.

11. The method for producing the microporous film roll (1) for the battery separator according to claim 10, wherein the indicator part (18) is printed by any of an inkjet printer, a laser printer and a magic marker.

## Patentansprüche

1. Mikroporöse Filmrolle (1) für einen Batterieseparator, umfassend, auf einem mikroporösen Film (3) für den Batterieseparator einen Anzeigeteil (18), der sich in seinen optischen Eigenschaften von dem mikroporösen Film für den Batterieseparator unterscheidet, wobei die mikroporöse Filmrolle (1) **dadurch gekennzeichnet ist, dass** der Anzeigeteil (18) im Wesentlichen keine Dicke aufweist, so dass eine Dicke in einem Abschnitt des Separators mit dem Anzeigeteil (18) und einem Abschnitt des Separators, das keinen Anzeigeteil (18) aufweist, identisch ist,
wobei der Anzeigeteil (18) in einem vorbestimmten Abstand von einem Endteil des mikroporösen Films (3) in der Nähe eines Windungskerns (12) der mikroporösen Filmrolle (3) angeordnet ist und eine Breite von 0,5 bis 5 Zentimetern in Längsrichtung des mikroporösen Films (3) über ein links-rechts Ende des mikroporösen Films (3) aufweist.

2. Mikroporöse Filmrolle (1) für den Batterieseparator gemäß Anspruch 1, wobei der Anzeigeteil (18) und die mikroporöse Filmrolle (1) für den Batterieseparator in ihrem Lichtabschirmvermögen oder ihrem Lichtreflexionsvermögen unterschiedlich sind.

3. Mikroporöse Filmrolle (1) für den Batterieseparator gemäß Anspruch 1 oder 2, wobei der Anzeigeteil (18) eine farbige oder zeichenbedruckte Stelle durch Drucken ist.

4. Mikroporöse Filmrolle (1) für den Batterieseparator gemäß Anspruch 3, wobei die farbige oder zeichenbedruckte Stelle durch Drucken eine Stelle ist, die von einer Druckmaschine (17) eines Tintenstrahldruckers, eines Laserdruckers und eines Magic Markers gefärbt oder zeichenbedruckt wird.

5. Verwendung der mikroporösen Filmrolle (1) für den Batterieseparator gemäß irgendeinem der Ansprüche 1 bis 4, zum Erfassen des Annäherns eines Endteils des mikroporösen Films (3) für den Batterieseparator in einer Batterieproduktionslinie, wobei der Anzeigeteil (18) durch einen optischen Sensor (4, 5) in der Batterieproduktionslinie erfasst wird.

6. Verfahren zur Herstellung einer mikroporösen Filmrolle (1) für einen Batterieseparator, umfassend:,
Bereitstellen eines Anzeigeteils (18), das sich in seinen optischen Eigenschaften von der mikroporösen Filmrolle für den Batterieseparator unterscheidet, auf einem mikroporösen Film (3) für den Batterieseparator, und
Wickeln des mikroporösen Films (3) um einen Windungskern (12),
wobei das Verfahren **dadurch gekennzeichnet ist, dass**
der Anzeigeteil (18) im Wesentlichen keine Dicke aufweist, so dass eine Dicke in einem Abschnitt des Separators mit dem Anzeigeteil (18) und einem Abschnitt des Separators, der keinen Anzeigeteil (18) aufweist, identisch ist,
der Anzeigeteil (18) durch Einfärben oder Zeichendrucken in einem vorbestimmten Abstand von einem Endteil des mikroporösen Films (3) bereitgestellt wird, wobei der Anzeigeteil (18) eine Breite von 0,5 bis 5 Zentimetern in Längsrichtung des mikroporösen Films (3) über ein links-rechts Ende des mikroporösen Films (3) aufweist, und
der Endabschnitt des mikroporösen Films (3) nahe der Stelle, an der der Anzeigeteil (18) gefärbt oder gedruckt ist, zuerst den Windungskern (12) der mikroporösen Filmrolle (3) erreicht, wenn der mikroporöse Film (3) um den Windungskern (12) gewickelt wird.

7. Verfahren zur Herstellung der mikroporösen Filmrolle (1) für den Batterieseparator gemäß Anspruch 6, umfassend Bereitstellen eines Anzeigeteils (18), das sich in seinem Lichtabschirmvermögen oder seinem Lichtreflexionsvermögen von der mikroporösen Filmrolle für den Batterieseparator auf dem mikroporösen Film (3) für den Batterieseparator unterscheidet.

8. Verfahren zur Herstellung der mikroporösen Filmrolle (1) für den Batterieseparator gemäß Anspruch 6 oder 7, wobei der Anzeigeteil (18) in einem Schritt vor einem Schritt des Schlitzens der Verarbeitung einer Originalrolle (8) des mikroporösen Films (3) für den Batterieseparator zu einer Produktrolle (11) hergestellt wird.

9. Verfahren zur Herstellung der mikroporösen Filmrolle (1) für den Batterieseparator gemäß Anspruch 6 oder 7, wobei der Anzeigeteil (18) während des Schlitzschritts der Verarbeitung einer Originalrolle (8) des mikroporösen Films (3) für den Batterieseparator zu der Produktrolle (11) vorbereitet wird, wobei eine Schlitzschrittlinie mit einem Schneidwerkzeug (11), einer Windungsvorrichtung und einer Farb- oder Zeichendruckvorrichtung (17) bereitgestellt wird.

10. Verfahren zur Herstellung der mikroporösen Filmrolle (1) für den Batterieseparator gemäß einem der Ansprüche 6 bis 9, wobei der Anzeigeteil (18) durch Einfärben oder Zeichendruck durch Drucken bereitgestellt wird.

11. Verfahren zur Herstellung der mikroporösen Filmrolle (1) für den Batterieseparator gemäß Anspruch 10, wobei der Anzeigeteil (18) von irgendeinem Tintenstrahldrucker, einem Laserdrucker und einem Magic Marker gedruckt wird.

## Revendications

1. Rouleau de film microporeux (1) destiné à un séparateur de batterie, comprenant, sur un film microporeux (3) destiné au séparateur de batterie, une partie d'indication (18) différente en termes de caractéristiques du film microporeux destiné au séparateur de batterie, le rouleau de film microporeux (1) étant **caractérisé en ce que**
la partie d'indication (18) ne comporte sensiblement aucune épaisseur de sorte qu'une épaisseur soit identique dans une partie du séparateur comportant la partie d'indication (18) et une partie du séparateur ne comportant aucune partie d'indication (18),
dans lequel la partie d'indication (18) se trouve à une distance prédéterminée d'une partie d'extrémité du film microporeux (3) à proximité d'un noyau d'enroulement (12) du film de rouleau microporeux (3), et comporte une largeur comprise entre 0,5 et 5 cm dans une direction longitudinale du film microporeux (3) sur une extrémité gauche-droite du film microporeux (3).

2. Rouleau de film microporeux (1) destiné au séparateur de batterie selon la revendication 1, dans lequel la partie d'indication (18) et le rouleau de film microporeux (1) destiné au séparateur de batterie sont différents en termes de capacités de protection contre la lumière ou de réflectivité de lumière.

3. Rouleau de film microporeux (1) destiné au séparateur de batterie selon la revendication 1 ou la revendication 2, dans lequel la partie d'indication (18) est un site en couleur ou à caractères imprimés par impression.

4. Rouleau de film microporeux (1) destiné au séparateur de batterie selon la revendication 3, dans lequel le site en couleur ou à caractères imprimés par impression est un site coloré ou à caractères imprimés au moyen d'une machine d'impression (17) quelconque d'une imprimante à jet d'encre, d'une imprimante laser et d'un feutre indélébile.

5. Utilisation du rouleau de film microporeux (1) destiné au séparateur de batterie selon l'une quelconque des revendications 1 à 4, permettant de détecter l'approche d'une partie d'extrémité du film microporeux (3) destiné au séparateur de batterie dans une ligne de production de batterie, dans laquelle la partie d'indication (18) est détectée au moyen d'un capteur optique (4, 5) situé dans la ligne de production de batterie.

6. Procédé de production d'un rouleau de film microporeux (1) destiné au séparateur de batterie, consistant à :
obtenir une partie d'indication (18) différente en termes de caractéristiques optiques du rouleau de film microporeux destiné au séparateur de batterie situé sur un film microporeux (3) destiné au séparateur de batterie, et
enrouler le film microporeux (3) autour d'un noyau d'enroulement (12),
dans lequel le procédé est **caractérisé en ce que**
la partie d'indication (18) ne comporte sensiblement aucune épaisseur de sorte qu'une épaisseur soit identique dans une partie du séparateur comportant la partie d'indication (18) et une partie du séparateur ne comportant aucune partie d'indication (18),
la partie d'indication (18) est obtenue par coloration ou par impression de caractères à une distance prédéterminée d'une partie d'extrémité du film microporeux (3), dans lequel la partie d'indication (18) comporte une largeur comprise entre 0,5 et 5 cm dans une direction longitudinale du film microporeux (3) sur une extrémité gauche-droite du film microporeux (3), et
la partie d'extrémité du film microporeux (3) située à proximité de l'endroit où la partie d'indication (18) est colorée ou imprimée atteint en premier le noyau d'enroulement (12) du film de rouleau microporeux (3) lorsque le film microporeux (3) est enroulé autour du noyau d'enroulement (12).

7. Procédé de production du rouleau de film microporeux (1) destiné au séparateur de batterie selon la revendication 6, comprenant, l'obtention d'une partie d'indication (18) différente en termes de protection contre la lumière ou de réflectivité de lumière du rouleau de film microporeux destiné au séparateur de batterie situé sur le film microporeux (3) destiné au séparateur de batterie.

8. Procédé de production du rouleau de film microporeux (1) destiné au séparateur de batterie selon la revendication 6 ou la revendication 7, dans lequel la partie d'indication (18) est préparée pendant une étape avant une étape de refente consistant à traiter un rouleau original (8) du film microporeux (3) destiné au séparateur de batterie en un rouleau de produit (11).

9. Procédé de production du rouleau de film microporeux (1) destiné au séparateur de batterie selon la revendication 6 ou la revendication 7, dans lequel la partie d'indication (18) est préparée pendant une étape de refente consistant à traiter un rouleau original (8) du film microporeux (3) destiné au séparateur de batterie en un rouleau de produit (11), dans lequel une ligne d'étape de refente est obtenue au moyen d'une coupeuse (11), d'un dispositif d'enroulement et d'un dispositif de coloration ou d'impression de caractères (17).

10. Procédé de production du rouleau de film microporeux (1) destiné au séparateur de batterie selon l'une quelconque des revendications 6 à 9, dans lequel la partie d'indication (18) est obtenue par coloration ou impression de caractères par impression.

11. Procédé de production du rouleau de film microporeux (1) destiné au séparateur de batterie selon la revendication 10, dans lequel la partie d'indication (18) est imprimée au moyen de l'un quelconque parmi une imprimante à jet d'encre, une imprimante laser et un feutre indélébile.
